# EUROPÄISCHE PATENTSCHRIFT

(11) **EP 0 540 881 B1**
(45) Veröffentlichungstag und Bekanntmachung des Hinweises auf die Patenterteilung: **01.03.1995**
(21) Anmeldenummer: 92116867.0
(22) Anmeldetag: 02.10.1992
(51) Int. Cl.: A01D 41/14

(54) **Selbstfahrender Mähdrescher mit die Bodenkontour abtastenden Fühlern**
Self-propelled combine harvester with sensors detecting the soil profile
Moisonneuse-batteuse automotrice avec palpeurs détectant le contour du sol

(30) Priorität: 06.11.1991 DE 4136467; 23.11.1991 DE 4138496
(43) Veröffentlichungstag der Anmeldung: 12.05.1993
(73) Patentinhaber: Claas OHG beschränkt haftende offene Handelsgesellschaft, D-33426 Harsewinkel (DE)
(72) Erfinder: Ostrup, Heinrich, W-4834 Harsewinkel (DE); Ristic, Stevan, W-4804 Versmold (DE)

(56) Entgegenhaltungen:
- DE-A- 2 020 920
- DE-A- 3 133 089
- DE-A- 3 830 908
- DE-A- 3 842 400

## Beschreibung

Die Erfindung betrifft einen selbstfahrenden Mähdrescher mit vorderem zweigeteiltem Schneidwerk, welches von einer Arbeitsstellung auf ein, die maximal für den Straßentransport zugelassene Breite nicht überschreitendes Maß zusammenklappbar ausgebildet ist, wobei unterhalb der Mulde einer jeden Schneidwerkshälfte die Bodenkontour mechanisch abtastende Fühler zur Regelung der Schneidwerkshöheneinstellung vorgesehen sind.

Bei einem bekannten Mähdrescher sind die den Boden abtastenden Fühler um quer zur Fahrtrichtung vorgesehene Achsen schwenkbar angeordnet. Die Längsachse der Fühler verläuft dabei in Fahrtrichtung, so daß sie während des Gleitens auf dem Boden nicht beschädigt werden können. Bei Mähdreschern, deren Schneidwerkshälften zum Zwecke des Straßentransportes um eine vertikale Achse verschwenkt werden, wie nach der deutschen Patentanmeldung P 38 30 908, stehen demzufolge auch die Fühler in Straßentransportstellung quer zur Fahrtrichtung. Dies hat zur Folge, daß die Fühler bei nicht immer vermeidbarem Bodenkontakt verbogen werden können, und zwar soweit, daß sie ihre Funktion als Bodenkontourabtaster in Arbeitsstellung nicht mehr erfüllen können.

Bei Mähdreschern, deren Schneidwerkshälften für den Straßentransport, wie nach der deutschen Patentanmeldung P 38 42 400, gegeneinander verschoben und übereinander gelegt werden, verbleiben die Fühler der unteren Schneidwerkshälfte im Bereich des Bodens. Sie liegen allerdings ebenso wie in Arbeitsstellung parallel zur Fahrtrichtung. Dies hat zur Folge, daß sich die Fühler bei Bodenkontakt mit der Straße zwar nicht verbiegen können; sie unterliegen aber aufgrund des harten Straßenbelages einem sehr hohen Verschleiß. In der Praxis wird bisher bei bekannten Schneidwerksbauarten beim Straßentransport die zusammengeklappte Schneidwerkseinrichtung so hoch gehoben, bis die Fühler ihren Bodenkontakt verlieren. Dies hat jedoch zur Folge, daß dem Maschinenfahrer von der Kabine aus die gesetzlich vorgeschriebene Sicht versperrt wird.

Der vorliegenden Erfindung liegt daher das Problem zugrunde, einen Mähdrescher der eingangs näher bezeichneten Art so auszubilden, daß die Fühler während des Straßentransportes mit Sicherheit keinen Kontakt zur Fahrbahn haben, und eine ausreichende Sicht für den Fahrer vorhanden ist. Dies wird erreicht durch eine die an den Mulden gelagerten Fühler der Schneidwerkshälften, deren Boden auch in Transportstellung dem Ackerboden bzw. der Straße zugewandt ist, während der Verlagerung der beiden Schneidwerkshälften von der Arbeits- in die Transportstellung an den Boden der Mulden verlagernde Vorrichtung. Vorteilhafte Ausführungsformen dieser Vorrichtung sind in den Unteransprüchen näher definiert.
Im Folgenden soll die Erfindung anhand eines Ausführungsbeispieles und mehrerer dieses schematisch darstellender Figuren näher erläutert werden, wobei das zu beschreibende Ausführungsbeispiel einschließlich der Zeichnungsfiguren wesentliche Merkmale der Erfindung darstellen. Dabei zeigt:
- Fig. 1: das um eine vertikale Achse schwenkbare zweigeteilte Schneidwerk eines Mähdreschers
- Fig. 2: das in Fig. 1 dargestellte klappbare Schneidwerk in zum Teil geklappter Stellung,
- Fig. 3: das in Fig. 1 dargestellte Schneidwerk in der Seitenansicht,
- Fig. 4: eine Teildraufsicht im Bereich der äußeren Begrenzung auf die in Fig. 3 dargestellte Einrichtung,
- Fig. 5: einen selbstfahrenden Mähdrescher mit zweigeteiltem Schneidwerk, wobei die beiden Schneidwerkshälften übereinander verlagert werden.
- Fig. 6: das in Fig. 5 dargestellte Schneidwerk in vollständiger Transportstellung und
- Fig. 7: eine schematische Draufsicht auf das in Arbeitsstellung befindliche Schneidwerk eines Mähdreschers nach Fig. 5.

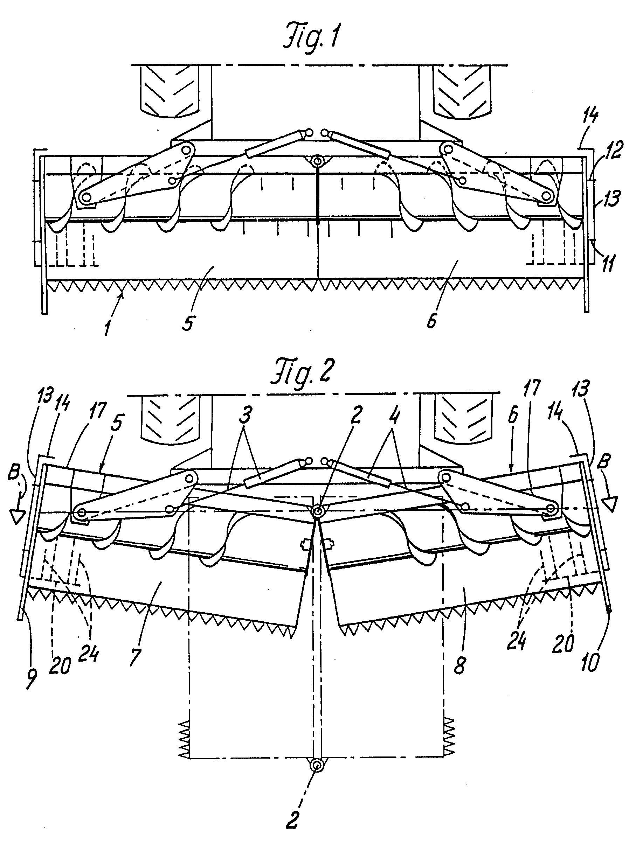

Gemäß der Figuren 1 bis 4 ist mit der Positionszahl 1 ein klappbares Schneidwerk als Ganzes bezeichnet, welches um eine vertikale Achse 2 durch die hydraulischen Einheiten 3 und 4 aus der in Fig. 1 dargestellten Arbeitsstellung in die in

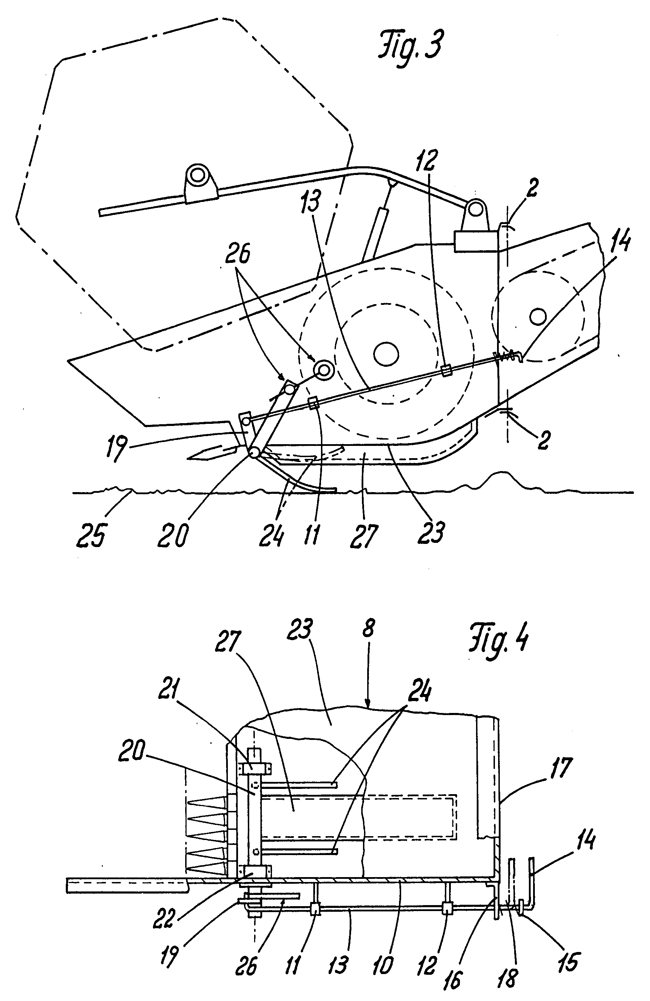

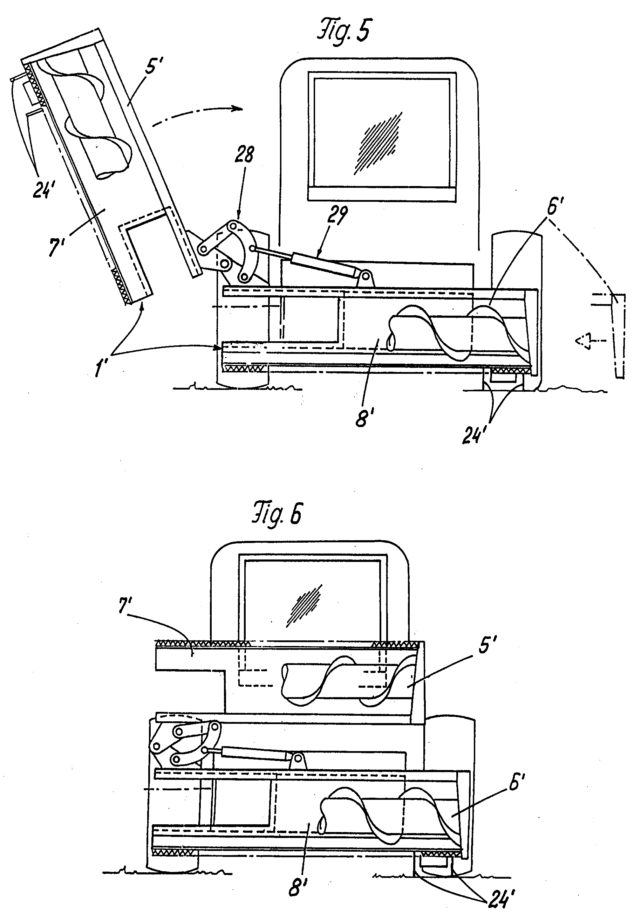

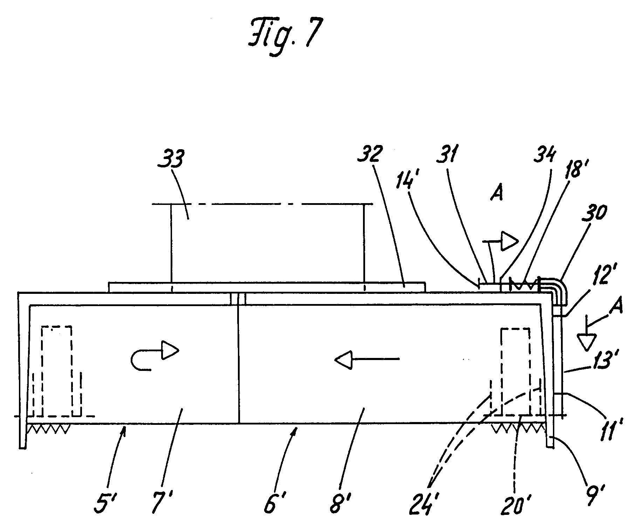

Fig.2 mit gestrichelten Linien dargestellte Transportstellung in horizontaler Ebene verschwenkt werden kann. Das Schneidwerk selbst besteht dabei aus zwei schwenkbaren Schneidwerkshälften 5 und 6. Die beiden Mulden 7 und 8 dieser Schneidwerkshälften weisen Seitenwände 9 und 10 auf. Mit jeder dieser Seitenwände sind äußere Führungen 11 und 12 verbunden, in denen eine Vorrichtung axial beweglich gehalten ist. Diese Vorrichtung weist eine Stange 13 mit einem einendig Anschlag 14 auf, wobei im Bereich dieses Anschlages 14 mit der Stange eine diese umgreifende Scheibe 15 verschweißt ist. Zwischen dieser Scheibe 15 und einem mit der Rückwand 17 der Mulden 7 und 8 verbundenen Halter 16 stützt sich eine Druckfeder 18 ab. Das dem Anschlag 14 entgegengesetzte Ende der Stange 13 ist gelenkig mit einem Hebel 19 verbunden, welcher mit einer Schwenkachse 20 fest verbunden ist. Diese Schwenkachse 20 ist frei drehbar in Konsolen 21 und 22 gelagert, die mit dem Boden 23 einer jeden Mulde 7 bzw. 8 verbunden sind. Mit der Achse 20 sind Fühler 24 fest verbunden, die aufgrund der Kraft der Druckfeder 18 gegen den Ackerboden 25 gedrückt werden. Über einer nicht näher bezeichneten aber an sich bekannten Einrichtung 26 wird das Maß der Verschwenkung der Fühler 24 an eine Einrichtung zur Regulierung der Höhe des gesamten Schneidwerks 1 weitergegeben. Werden nun die beiden Schneidwerkshälften 5 und 6 aus der in Fig. 1 dargestellten Arbeitsstellung in die in Fig. 2 mit strichpunktierten Linien dargestellte Transportlage verschwenkt, fahren die beiden Anschläge 14 kurz vor dem Erreichen der Transportstellung gegen die Rückwand der korrespondierenden Mulden, so daß die Stangen 13 in
Pfeilrichtung B (Fig. 2) verschoben werden. Durch diese Bewegung werden die beiden Achsen 20 der Mulden 7 und 8 , bezogen auf die Fig. 3, gegen Uhrzeigersinn soweit verschwenkt, bis die Fühler 24 die in Fig.3 mit gestrichelten Linien dargestellte Lage einnehmen. Sie liegen dann am Muldenboden an, und zwar beidseits einer ebenfalls mit dem Muldenboden verschweißten Kufe 27. Auf diese Weise wird verhindert, daß die Fühler 24 während des Transportes in der vorbeschriebenen Weise hinderlich sind.
Das in den Fig. 5 bis 7 dargestellte Ausführungsbeispiel unterscheidet sich nur insofern von den in den Fig. 1 bis 4 dargestellten, als daß die Schneidwerkshälften nicht um eine vertikale Achse schwenkbar sind. Vielmehr besteht in diesem Fall das gesamte Schneidwerk 1' aus zwei Schneidwerkshälften 5' und 6', wobei die Schneidwerkshälfte 5' auf die Schneidwerkshälfte 6' über eine Hebeleinrichtung 28 und über eine Kolbenzylindereinheit 29 gelegt werden kann. Die Schneidwerkshälfte 6' wird dabei quer zur Fahrtrichtung soweit verschoben, bis sie mittig zur Mähdrescherlängsachse ausgerichtet ist, wie dies die Figguren 5 und 6 zeigen. Bei einem so ausgebildeten Mähdrescher sind zwar nicht mehr die mit der Mulde 7' verbundenen Fühler 24' der nach oben geklappten Schneidwerkshälfte 5' gefährdet, sondern nur noch die mit der Mulde 8' verbundenen Fühler 24' der quer verschobenen Schneidwerkshälfte 6'. Damit diese Fühler während des Straßentransportes nicht mehr in Kontakt mit der Straße sind, weist die Mulde 8' der Schneidwerkshälfte 6' eine Vorrichtung auf, die nahezu identisch aufgebaut ist, wie die Vorrichtung gemäß der Fig.3 und 4. Der einzige Unterschied besteht darin, daß die Stange 13' über eine Kurvenführung 30 mit einer weiteren Stange 31 in Verbindung steht, wobei der Anschlag 14' am Ende der Stange 31 vorgesehen ist. Während des seitlichen Verfahrens der Schneidwerkshälfte 6' fährt dabei der Anschlag 14' seitlich gegen einen das Schneidwerk tragenden Rahmen 32, der seinerseits am Schrägfördererkanal 33 befestigt ist. Dabei werden die Stangen 31 und 13' in Pfeilrichtung A verschoben, wodurch sich die Fühler 24' an den Boden der Mulde 8' der Schneidwerkshälfte 6' anlegen.

## Patentansprüche

1. Selbstfahrender Mähdrescher mit vorderem zweigeteiltem Schneidwerk, welches von einer Arbeitsstellung auf ein die maximal für den Straßentransport nicht überschreitendes Maß zusammenklappbar ausgebildet ist, wobei unterhalb der Mulde (7,8;8')einer jeden Schneidwerkshälfte (5,6;6') die Bodenkontour mechanisch abtastende Fühler (24;24') zur Regelung der Schfleidwerkshöheneinstellung vorgesehen sind,
**gekennzeichnet durch**
eine die an den Mulden (7, 8; 8') gelagerten Fühler (24; 24') der Schneidwerkshälften (5,6;6'), deren Boden auch in Transportstellung dem Ackerboden bzw. der Straße zugewandt ist, während der Verlagerung der beiden Schneidwerkshälften (5, 6 bzw. 6') von der Arbeits- in die Transportstellung an den Boden der Mulden (7,8 bzw. 8') verlagernden Vorrichtung.

2. Selbstfahrender Mähdrescher nach Anspruch 1
**dadurch gekennzeichnet,**
daß die Fühler (24, 24') an Achsen (20 bzw. 20') befestigt sind und jede Ache (20 bzw. 20') aus mindestens einer Muldenseitenwand (9,10 bzw. 9') nach außen hervorragt, wobei auf das vorragende Ende ein Hebel (19) fest aufgesetzt ist, welcher über ein Gestänge (13 bzw. (13',31) verschwenkbar ist.

3. Selbstfahrender Mähdrescher nach den Ansprüchen 1 und 2,
**dadurch gekennzeichnet,**
daß das Gestänge (13 bzw. 13', 31) in an der Außenseite der Mulden (7, 8, 8') befestigten Führungen (11, 12 bzw. 11', 12') gehalten ist.

4. Selbstfahrender Mähderscher nach den Ansprüchen 1 bis 3,
**dadurch gekennzeichnet,**
daß das Gestänge bereichsweise von einer Druckfeder (18) umgeben ist, die sich einerseits an einer mit dem Gestänge verschweißten Scheibe (15) und andererseits mittel oder unmittelbar an der ihr zugeordneten Mulden (7 bzw. 8) abstützt, wodurch die Fühler (24) in Richtung auf den Ackerboden hin
verschwenkt werden.

5. Selbstfahrender Mähdrescher nach den Ansprüchen 1 bis 3,
**dadurch gekennzeichnet,**
daß das Gestänge (13', 31) bereichsweise von einer Druckfeder (18') umgeben ist, die sich einerseits an der Eckumlenkung (30) und andererseits an einer mit der Rückwand der Mulde (8') verschweißten Scheibe (34) abstützt, wodurch die Fühler in Richtung auf den Ackerboden hin verschwenkt werden.

6. Selbstfahrender Mähdrescher nach den Ansprüchen 1 bis 3 und 5,
**dadurch gekennzeichnet,**
daß das Gestänge (13', 31) einen Anschlag 14' aufweist, der beim Verfahren der Schneidwerkshälfte (6') gegen den Tragrahmen (32) gefahren wird, wodurch das Gestänge (31, 13') so verschoben wird, daß die Fühler an den Boden der Mulden (8') verschwenkt werden.

7. Selbstfahrender Mähdrescher nach den Ansprüchen 1 bis 4,
**dadurch gekennzeichnet,**
daß die Gestänge (13) der Mulden
(7, 8) gegeneinander höhenversetzt angeordnet sind und daß sich während des Verschwenkens der Schneidwerkshälften (5,6) jeder Anschlag (14) an der Rückwand (17) der ihr nicht zugeordneten Mulden (7bzw.8) anlegt und hierdurch verschoben werden, so daß die Fühler an den Boden der Mulde (7, 8) angeschwenkt werden.

8. Selbstfahrender Mähdrescher nach den Ansprüchen 1 bis 4,
**dadurch gekennzeichnet,**
daß das Gestänge (13) jeder Schneidwerkshälfte (5,6) einen Anschlag (14) aufweist, wobei die Anschläge (14) während des Verschwenkens der Schneidwerkshälften (5, 6) von der Arbeits- in die Transportstellung gegeneinander gefahren werden, so daß die Gestänge (13) verschoben und die Fühler an den Boden der Mulden (7,8) angeschwenkt werden.

## Claims

1. A self-propelled combine harvester having a front cutting mechanism which is divided into two and which is adapted to be folded together from a working position to a dimension which does not exceed the maximum for on-road transportation, wherein sensors for mechanically sensing the ground contour are provided beneath the tray of each cutting mechanism half for regulating the cutting mechanism height setting, characterized by an arrangement for displacing the sensors (24, 24'), which are mounted on the trays (7, 8, 8'), of the cutting mechanism halves (5, 6, 6') whose bottom also faces in the transportation position towards the ground of the field or the road, during the displacement of the two cutting mechanism halves (5, 6 or 6') from the working position into the transportation position, against the bottom of the trays (7, 8 or 8').

2. A self-propelled combine harvester according to claim 1 characterized in that the sensors (24, 24') are fixed to shafts (20 or 20') and that each shaft (20 or 20') projects outwardly from at least one tray side wall (9, 10 or 9'), wherein fixedly fitted on the projecting end is a lever (19) which is pivotable by way of a linkage (13 or 13', 31).

3. A self-propelled combine harvester according to claim 1 and 2 characterized in that the linkage (13 or 13', 31) is held in guides (11, 12 or 11', 12') fixed to the outside of the trays (7, 8, 8').

4. A self-propelled combine harvester according to claim 1 to 3 characterized in that the linkage is surrounded in a region-wise manner by a compression spring (18) which bears on the one hand against a plate (15) welded to the linkage and on the other hand directly or indirectly against the tray (7 or 8) associated therewith, whereby the sensors (24) are pivoted in a direction towards the ground of the field.

5. A self-propelled combine harvester according to claim 1 to 3 characterized in that the linkage (13', 31) is surrounded in a region-wise inner by a compression spring (18) which bears on the one hand against a corner bend (30) and on the other hand against a plate (34) welded to the rear wall of the tray (8'), whereby the sensors are pivoted in a direction towards the ground of the field.

6. A self-propelled combine harvester according to claims 1 to 3 and 5 characterized in that the linkage (13', 31) has an abutment (14') which upon movement of the cutting mechanism half (6') is moved against the support frame (32) whereby the linkage (31, 13') is so displaced that the sensors are pivoted against the bottom of the trays (8').

7. A self-propelled combine harvester according to claims 1 to 4 characterized in that the linkages (13) of the trays (7, 8) are arranged displaced in respect of height relative to each other and that during the pivotal movement of the cutting mechanism halves (5, 6) each abutment (14) bears against the rear wall (17) of the trays (7 and 8 respectively) not associated therewith and are displaced thereby so that the sensors are pivoted against the bottom of the tray (7, 8).

8. A self-propelled combine harvester according to claims 1 to 4 characterized in that the linkage (13) of each cutting mechanism half (5, 6) has an abutment (14), wherein the abutments (14) are moved against each other during the pivotal movement of the cutting mechanism halves (5, 6) from the working position into the transportation position so that the linkages (13) are displaced and the sensors are pivoted against the bottom of the trays (7, 8).

## Revendications

1. Moissonneuse-batteuse automotrice comprenant un dispositif de coupe avant en deux parties, lequel est conçu de manière à pouvoir se replier à partir d'une position de fonctionnement dans une mesure ne dépassant pas la largeur maximale permise pour le transport par route, des palpeurs analysant par un procédé mécanique le contour du sol étant prévus en-dessous du bac de chargement de chaque partie du dispositif de coupe, de manière à régler l'ajustage en hauteur de ce dispositif de coupe, moissonneuse-batteuse automotrice caractérisée par des palpeurs (24,24') qui sont disposés sur les bacs de chargement (7,8,8') des parties du dispositif de coupe (5,6,6') dont le fond est tourné vers la surface cultivée, respectivement vers la route, également en position de transport, et qui pendant le déplacement des deux parties du dispositif de coupe (5,6 respectivement 6') dé la position de fonctionnement à la position de transport sur le dispositif se déplacent vers le fond des bacs de chargement (7,8 respectivement 8').

2. Moissonneuse-batteuse automotrice selon la revendication 1, caractérisée en ce que les palpeurs (24,24') sont fixés sur les axes (20, respectivement 20') et en ce que chacun des axes (20 respectivement 20') fait saillie au moins hors d'une paroi latérale des bacs de chargement (9,10 respectivement 9'), un levier (19) étant fixé sur l'extrémité saillante et pouvant être pivoté via un système de tiges (13, respectivement 13',31).

3. Moissonneuse-batteuse automotrice selon l'une ou l'autre des revendications 1 et 2, caractérisée en ce que le système de tiges (13 respectivement 13',31) est maintenu dans des glissières de guidage (11,12 respectivement 11',12') fixées sur la face extérieure des bacs de chargement (7,8,8').

4. Moissonneuse-batteuse automotrice selon l'une ou l'autre des revendications 1 et 2, caractérisée en ce que le système de tiges est partiellement entouré d'un ressort à pression (18) s'appuyant d'une part sur un disque (15) soudé au système de tiges et d'autre part indirectement ou directement sur les bacs de chargement (7 respectivement 8), les palpeurs (24) pouvant ainsi être pivotés dans la direction de la surface cultivée.

5. Moissonneuse-batteuse automotrice selon l'une ou l'autre des revendications 1 à 3, caractérisée en ce que le système de tiges (13',31) est partiellement entouré d'un ressort à pression (18') s'appuyant d'une part sur une glissière en courbe (30) et d'autre part sur un disque (34) soudé à la paroi arrière du bac de chargement (8'), les palpeurs pouvant ainsi être pivotés dans la direction de la surface cultivée.

6. Moissonneuse-batteuse automotrice selon l'une ou l'autre des revendications 1 à 3 et selon la revendication 5, caractérisée en ce que le système de tiges (13',31) présente un arrêt (14) qui lors du déplacement de la partie du dispositif de coupe (6') est amené contre le cadre porteur (32), le système de tiges (31,13') pouvant ainsi être déplacé de telle sorte que les palpeurs soient pivotés vers le fond du bac de chargement (8').

7. Moissonneuse-batteuse automotrice selon l'une ou l'autre des revendications 1 à 4, caractérisée en ce que les tiges des bacs de chargement (7,8) sont décalées vers le haut les unes par rapport aux autres et en ce que pendant le pivotement des parties du dispositif de coupe (5,6), chaque arrêt (14) est amené sur la partie arrière (17) du bac de chargement (7 respectivement 8) opposé et peut ainsi être déplacé de telle sorte que les palpeurs soient pivotés vers le fond du bac de chargement (7,8).

8. Moissonneuse-batteuse automotrice selon l'une ou l'autre des revendications 1 à 4, caractérisée en ce que le système de tiges (13) de chaque partie du dispositif de coupe (5,6) présente un arrêt (14), les arrêts (14) étant amenés l'un contre l'autre pendant le pivotement des parties du dispositif de coupe (5,6) de la position de fonctionnement à la position de transport, de telle sorte que les tiges (13) sont déplacées et les palpeurs sont pivotés vers le fond des bacs de chargement (7,8).
